# EUROPÄISCHE PATENTSCHRIFT

(11) **EP 0 980 509 B1**
(45) Veröffentlichungstag und Bekanntmachung des Hinweises auf die Patenterteilung: **27.08.2003**
(21) Anmeldenummer: 98928223.1
(22) Anmeldetag: 03.05.1998
(51) Int. Cl.: G01G 11/08

(54) **DOSIERVORRICHTUNG**
DOSING DEVICE
DOSEUR

(30) Priorität: 03.05.1997 DE 19718567
(43) Veröffentlichungstag der Anmeldung: 23.02.2000
(73) Patentinhaber: Pfister GmbH, 86165 Augsburg (DE)
(72) Erfinder: HÄFNER, Hans, Wilhelm, D-86551 Aichach (DE); BOCK, Günther, D-86316 Friedberg (DE); RIPP, Peter, D-86163 Augsburg (DE); WOLFSCHAFFNER, Hubert, D-86453 Dasing (DE)
(74) Vertreter: Fiener, Josef
(86) Internationale Anmeldenummer: EP9802609
(87) Internationale Veröffentlichungsnummer: WO98050764

(56) Entgegenhaltungen:
- EP-A- 0 025 203
- EP-A- 0 530 797
- DE-A- 4 231 017
- US-A- 2 181 756
- US-A- 5 409 139

## Beschreibung

Die Erfindung betrifft eine Dosiervorrichtung zum kontinuierlichen gravimetrischen Dosieren von schüttfähigem Gut gemäß den oberbegrifflichen Merkmalen des Patentanspruchs 1, sowie diesbezügliche Dosiersysteme.

Eine derartige Dosiervorrichtung ist aus der DE 42 31 017 A1 bekannt. Hierbei ist insbes. für die Drehrohrofenbefeuerung beim Zementbrennprozeß ein Dosierrotor vorgesehen, der durch im wesentlichen radial verlaufende Mitnehmerstege unterteilt ist.

Obwohl sich diese Vorrichtung insbesondere zur Dosierung von grobkörnigem Schüttgut eignet, kann es bei klebenden Schüttgütern bei der Entleerung und Beschickung nachfolgender Fördergeräte zu Problemen kommen, da es bei klebrigem Schüttgut zu Anbackungen und Klumpenbildung kommen kann. Bei relativ klebrigem Schüttgut, wie beispielsweise Teppichbodenschnitzel oder Reifenschnitzel, die als Sekundär- oder Substitut-Brennstoffe verwendet werden, kann es sogar zu Klemmerscheinungen zwischen dem umlaufenden Rotor und stationären Gehäuseteilen kommen, so daß hierdurch Förderstörungen und erhebliche Meßungenauigkeiten verursacht werden können. Zudem ist hierdurch das Mitnahmevolumen des Rotors relativ gering, sofern nicht ein besonders großer Rotordurchmesser oder höhere Umlaufgeschwindigkeiten des Rotors vorgesehen sind.

Demzufolge liegt der Erfindung die Aufgabe zugrunde, eine gattungsgemäße Dosiervorrichtung hinsichtlich des möglichen Durchsatzes und des Herstellungsaufwandes zu verbessern, sowie die Einsatzfähigkeit für klebriges Schüttgut in einem Dosiersystem zu ermöglichen.

Diese Aufgabe wird gelöst mit einer Dosiervorrichtung gemäß den Merkmalen des Patentanspruchs 1 und Dosiersystemen mit den Merkmalen des Patentanspruche 11, 12.

Durch die Anordnung einer nach unten hin ausgerichteten Druckluftdüse an der Entleerungsöffnung unmittelbar über dem geförderten Gutstrom des Schüttgutes wird die Entleerung des Gutstromes wesentlich erleichtert. Der Druckluftstrahl aus einer oder mehreren Druckluftdüsen, die bevorzugt als Flachdüsen ausgebildet sein können, lockert den durch die Dosiervorrichtung laufenden Gutstrom exakt an der Entleerstation auf, wodurch in dem Entleerbereich eine starke Verwirbelung und damit eine starke Auflockerung des klebrigen Schüttgutes erreicht wird. Damit werden die relativ kleinen Reifen- oder Teppichbodenschnitzel, wie sie als derartiges klebriges Schüttgut insbesondere für die Verwendung als Sekundär- oder Substitut-Brennstoffe (für fossile Brennstoffe) in Drehrohröfen für die Zementherstellung verwendet werden, auch durchmischt und somit homogenisiert, so daß ein relativ einheitliches Brennverhalten des klebrigen Schüttgutes bei der Verwendung als Sekundärbrennstoff erreicht wird.

Diese Homogenisierung ist auch Gegenstand des Systemanspruches, da hierdurch in eigenständiger Weise eine Aufbereitung des schwierig auszutragenden Schüttgutes und damit eine erhöhte Kurz- und Langzeitgenauigkeit erreicht werden kann. Dies gilt insbesondere auch in Verbindung mit der Wägung der Dosiervorrichtung und daran angeschlossener Bauteile, da hierdurch das jeweils in der Dosierstrecke befindliche Gut gravimetrisch erfaßt wird und dementsprechend die erforderliche Nachförderung aus dem Vorratsbehälter mit einer Austragfräse gesteuert werden kann.

Unterhalb der Entleerungsöffnung ist hierbei bevorzugt eine Zellenradschleuse angeordnet, so daß vor der Einspeisung in einen Injektor dieses "klebrige" Schüttgut gut aufgelockert und vereinzelt wird. Somit wird durch die an der Entleerungsöffnung angeordnete Druckluftdüse im Bereich der Entleerungsöffnung eine Verwirbelung erreicht, die weiterhin eine vollständige Entleerung des geförderten Gutstromes aus der Dosiervorrichtung erreicht, sowie den Gutstrom durch die Auflockerung für die Weiterförderung aufbereitet. Die Druckluftdüse kann hierbei je nach Fördergeschwindigkeit etwas gegenüber der Vertikalen zu dem eintreffenden Gutstrom hingeneigt sein, so daß sich an der Kante der Entleerungsöffnung eine "Abfräswirkung" des Luftstromes gegenüber dem Schüttgutstrom ergibt.

In bevorzugter Ausführung ist der Zuführstutzen mit seiner entgegen die Förderrichtung weisenden Hälfte bis nahe an die Umlaufebene der Mitnehmerstege geführt, so daß diese Hälfte als Abstreifer zu der benachbart gelegenen Entleerungsöffnung dienen kann. Zudem wird hierdurch der Entleerbereich abgegrenzt, so daß die Verwirbelungen und Durchmischungen des Fördergutes nur dort auftreten. Die in Förderrichtung weisende Hälfte des Zuführstutzens ist hierbei bevorzugt schräg angeschnitten und bildet somit eine Auslaßöffnung, so daß im Zusammenwirken mit den darunter vorbeilaufenden Mitnehmerstegen des Rotors eine strangförmige Gutanhäufung erreicht wird und diese über die Meßstrecke bis zur Entleerungsöffnung über einen Winkel von etwa 270° geführt wird.

Statt der vorstehend beschriebenen Ausbildung des unteren Endes des Zuführstutzens können auch tangential zur Förderrichtung ausgerichtete seitliche Lappen vorgesehen sein, die sich bis zur Umlaufebene der Mitnehmerstege erstrecken, so daß hierdurch ebenfalls eine strangförmige Anhäufung des Schüttgutes erreicht wird. In zweckmäßiger Weiterbildung sind die Mitnehmerstege an ihrem radial äußeren Ende mit einem Außenring verbunden, der höher als die Mitnehmerstege sein kann, so daß hierdurch eine äußere Begrenzung gegen Abfließen des Schüttgutes nach außen hin und eine räumliche Begrenzung der Luftströmung der Druckluftdüse gegeben ist. Bei dieser Ausbildung ist die zentrale Rotornabe ebenfalls höher ausgebildet, so daß der Verwirbelungsbereich zwischen dem Außenring und der Rotornabe eingegrenzt ist und somit bei der Umlaufbewegung der nach außen hin und nach innen hin begrenzte Schüttgutstrang exakt abgetragen wird.

Weitere vorteilhafte Ausgestaltungen sind Gegenstand der Unteransprüche. Nachfolgend wird ein Ausführungsbeispiel anhand der Zeichnung näher erläutert und beschrieben. Es zeigen:
- Fig. 1: eine perspektivische Ansicht einer Dosiervorrichtung;
- Fig. 2: eine Seitenansicht der Dosiervorrichtung;
- Fig. 3: eine Draufsicht auf die Dosiervorrichtung;
- Fig. 4: eine Schnittdarstellung entlang der Schnittlinie A-A in Fig. 3;
- Fig. 5: eine Schnittdarstellung entlang der Schnittlinie B-B in Fig. 3; und
- Fig. 6: eine Schemadarstellung des Gesamtsystems.

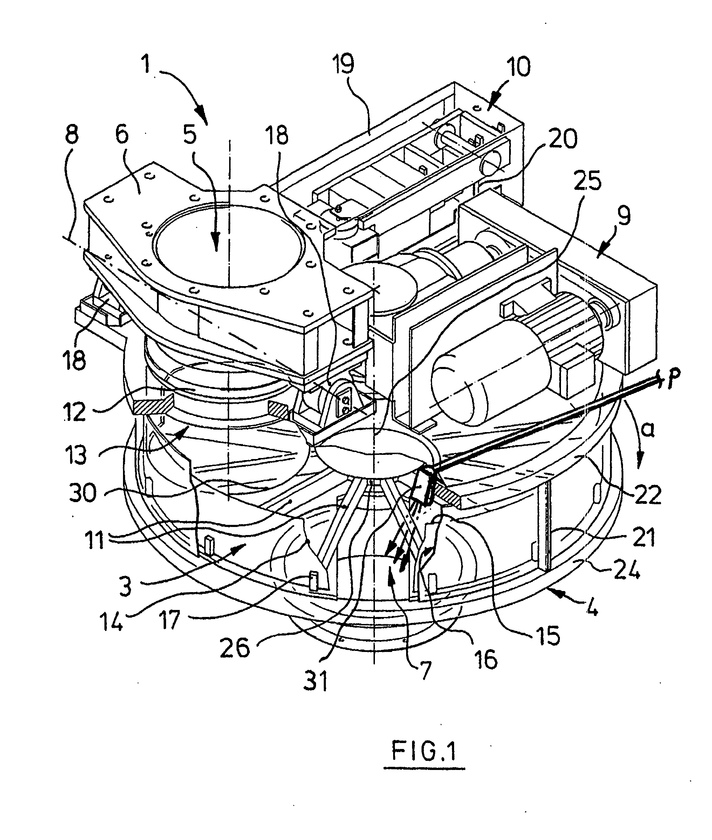

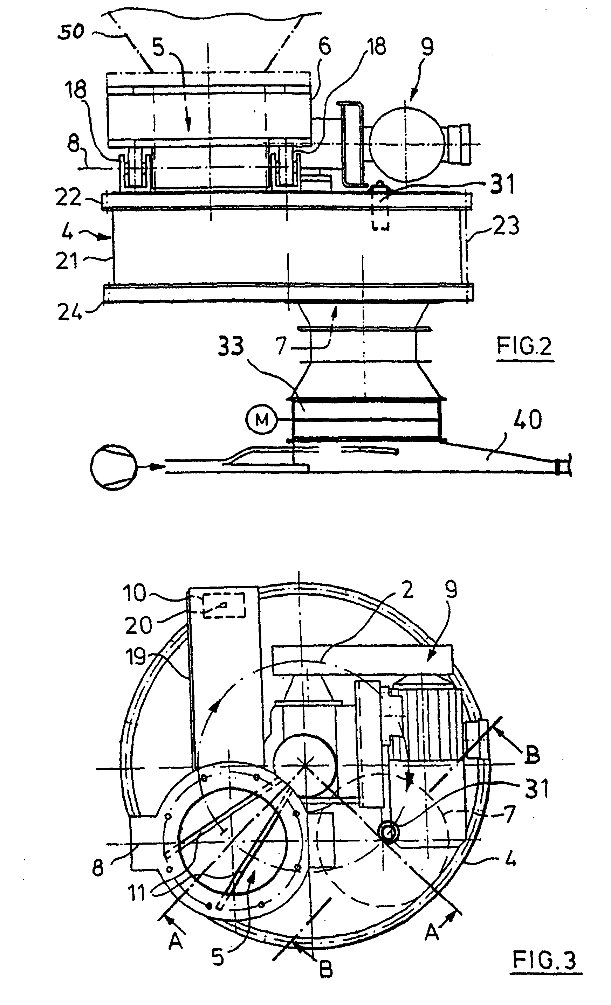

In Fig. 1 ist eine Dosiervorrichtung 1 dargestellt, die im wesentlichen aus einem Rotor 3 besteht, der in einem Gehäuse 4 umläuft, das bis auf eine Beschickungsöffnung 5 und eine Entleerungsöffnung 7 vollständig geschlossen ist. Die Beschickungsöffnung 5 und die Entleerungsöffnung 7 sind hierbei benachbart zueinander angeordnet, so daß sich eine möglichst lange Meßstrecke 2 (vgl. Fig. 3) über hier etwa 270° ergibt.

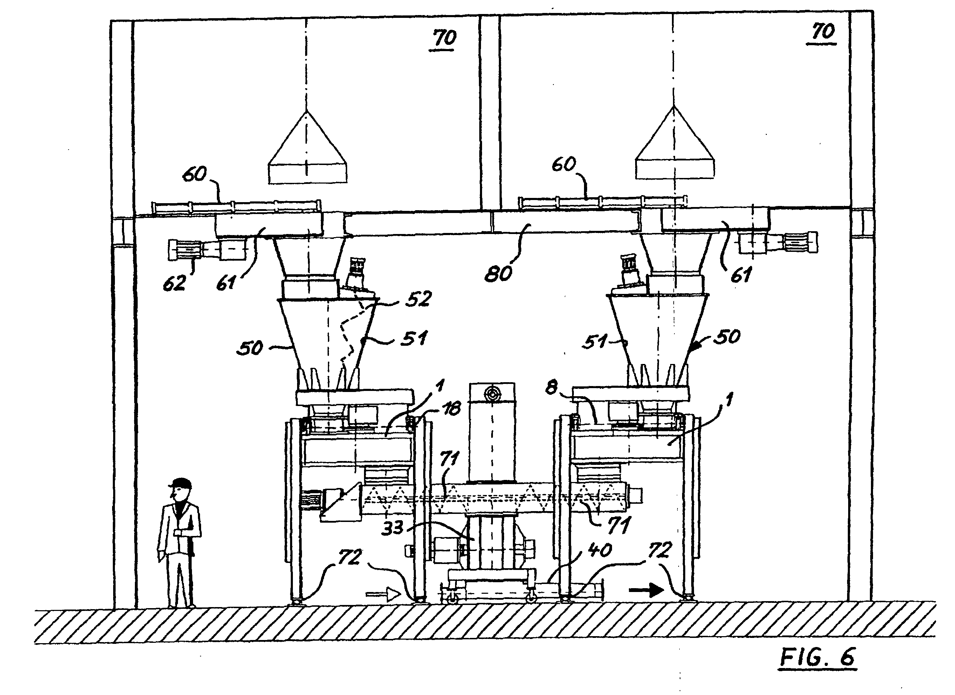

An der Beschickungsöffnung 5 ist ein Verschlußschieber 6 vorgesehen, der aus einem Bunker (Vorratsbehälter 70 in Fig. 6) oder einem Trichter (eines Homogenisierungsbehälters 51 gemäß Fig. 6) zugeführtes Schüttgut reguliert. Anstatt des Verschlußschiebers 6 können hierbei auch Auflockerungselemente, z. B. rührschneckenähnliche Austraghilfen wie ein Rührwerk 52 gemäß Fig. 6, angeordnet sein, um den Austrag des Schüttgutes aus einem Schüttgutsilo zur Dosiervorrichtung 1 sicherzustellen. Unterhalb des Verschlußschiebers 6 sind zur Bildung einer Schwenkachse 8, um die das Gehäuse 4 unter Gutbelastung verschwenken kann, zwei Schwenklager 18 vorgesehen. Diese Schwenkachse 8 verläuft bevorzugt durch -in Draufsicht gesehendie Mitte der oberen Beschickungsöffnung 5 und der unteren Entleerungsöffnung 7, um Fehlereinflüsse durch die Gutzufuhr bzw. Entleerung zu eliminieren.

Zum Antrieb des Rotors 3 ist eine Antriebsvorrichtung 9 vorgesehen, die hier beispielsweise aus einem nicht näher bezeichneten Elektromotor, einem Riementrieb und einem Kegelradgetriebe besteht, dessen Ausgang in eine vertikale Antriebsachse 25 für den Rotor 3 mündet. Die Antriebsvorrichtung 9 ist hierbei direkt auf das Gehäuse 4 montiert, so daß es Schwenkbewegungen um die Schwenkachse 8 mitvollziehen kann. Bei der Schwenkbewegung um die Schwenkachse 8, wie sie durch die Gutzufuhr und die Förderung entlang der Meßstrecke 2 verursacht werden, stützt sich das Gehäuse 4 auf eine stationär angeordnete Kraftmeßvorrichtung 10 ab, die hier beispielsweise über einen Zuganker 20 mit dem Gehäuse 4 verbunden ist. In diesem Ausführungsbeispiel ist die Kraftmeßvorrichtung 10 an einem Rahmen 19 befestigt, der mit dem ebenfalls stationär angeordneten Gehäuse des Verschlußschiebers 6 verbunden ist. Es kann jedoch auch ein gesondertes Abstützgerüst für die Kraftmeßvorrichtung 10 vorgesehen sein, wie dies in Fig. 6 mit dem Traggerüst 80 angedeutet ist.

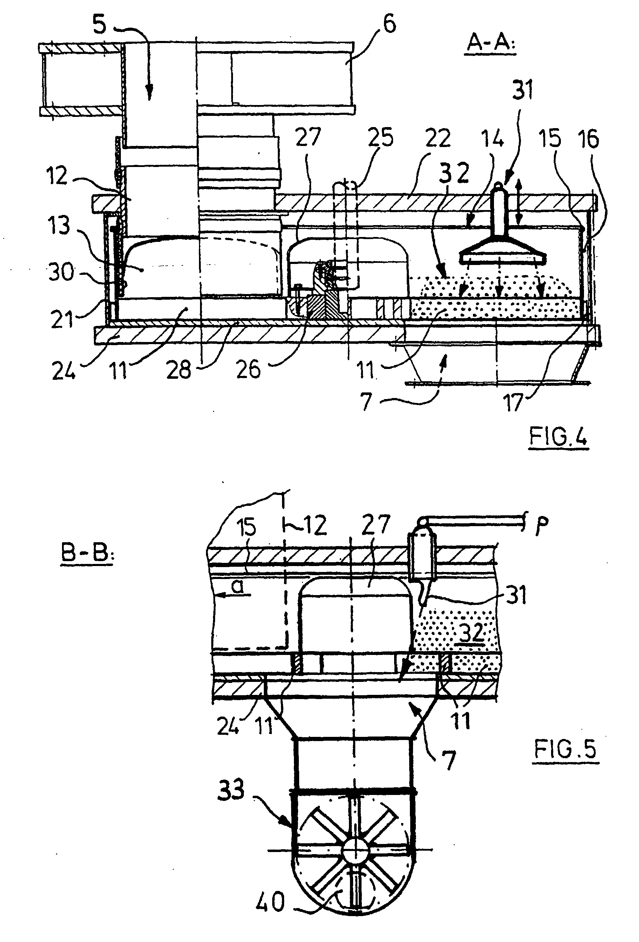

Als Kraftmeßvorrichtung 10 können verschiedene Arten von Kraftmeßzellen Verwendung finden, bevorzugt werden jedoch weglos arbeitende Meßgeber, wie Dehnmeßstreifen, Scherkraftgeber oder dergleichen verwendet. Der vorstehend beschriebene Aufbau entspricht somit im wesentlichen der DE 42 31 017 A1, wobei das jeweilige Gewicht des über die Meßstrecke 2 geförderten Gutstromes 32 (vgl. Fig. 4 und 5) erfaßt wird und das Produkt aus Momentlast und Fördergeschwindigkeit zur Ermittlung des Durchsatzes erfaßt wird. Zur Änderung des Durchsatzes oder zur Einstellung einer Sollmenge wird über eine nicht näher dargestellte, an sich bekannte Regelvorrichtung die Drehzahl der Antriebsvorrichtung 9 und damit des Rotors 3 nachgeregelt.

Die den Rotor 3 bildenden, sternförmig verlaufenden Mitnehmerstege 11 nehmen lediglich eine Teilhöhe der Innenhöhe des Gehäuses 4 ein. Durch die obere Gehäusewand 22 des Gehäuses 4 ist ein Zuführstutzen 12 hindurchgeführt, der eine untere Auslaßöffnung 13 aufweist, die bevorzugt durch einen schrägen Anschnitt des Zuführstutzens 12 gebildet ist. Die sternförmig angeordneten Mitnehmerstege 11 des Rotors 3 sind hier durch einen Außenring 14 miteinander verbunden, so daß sich eine hohe Stabilität des Rotors 3 ergibt. Zudem bewirkt der außen bis nahezu zur oberen Gehäusewand 22 hochgezogene Außenring 14, daß das durch die Beschickungsöffnung 5 im Zuführstutzen 12 zugeführte Schüttgut nicht nach außen hin abwandern kann. Entsprechendes gilt für die weiter unten beschriebene Luftströmung zur Auflockerung des Schüttgutes.

Der obere Rand 15 des Außenrings 14 ist in bevorzugter Ausgestaltung nach außen hin umgebördelt, so daß dieser mit geringem Spiel bezüglich des Gehäusemantels 21 umläuft. Zwischen dem Außenring 14 und dem Gehäusemantel 21 wird hierbei ein Umfangsspalt 16 gebildet, in dem sich ggfs. feinere Partikel des Schüttgutes ansammeln können, um mittels Hilfsmitnehmern 17 zur Entleerungsöffnung 7 mittransportiert zu werden. Die Hilfsmitnehmer 17 sind bevorzugt durch die äußeren Enden der Mitnehmerstege 11 gebildet, indem beispielsweise der Außenring 14 nur auf die Mitnehmerstege 11 aufgesetzt ist. Es sei darauf hingewiesen, daß die Entleerungsöffnung 7 in radialer Richtung über den Außenrand 14 hinausragt und somit mit dem Umfangsspalt 16 in Verbindung steht, so daß auch in dem Umfangsspalt 16 befindliches Gut an der Entleerungsöffnung 7 nach unten herausfällt und somit hinsichtlich der Momentanlast an der Meßstrecke 2 miterfaßt wird. In dem Umfangsspalt 16 herrscht zudem im Entleerbereich ein geringer Überdruck, so daß der Austrag erleichtert wird bzw. ein Festbacken von Partikeln verhindert wird.

In Fig. 2 ist eine Seitenansicht der Dosiervorrichtung 1 gezeigt, wobei insbesondere der Verlauf der durch die Schwenklager 18 gebildeten Schwenkachse 8 ersichtlich ist. Zudem ist der Aufbau des Gehäuses 4 mit einem Gehäusemantel 21, einer oberen Gehäusewand 22 und einer unteren Gehäusewand 24 dargestellt, die beispielsweise über Schraubverbindungen 23 mit der oberen Gehäusewand 22 verbunden ist. Zudem ist in Strich-Punkt-Linien oberhalb der Beschickungsöffnung 5 ein Zuführtrichter 50 aus dem oben erwähnten, mit einem Rührwerk 52 versehenen Homogenisierungsbehälter 51 (vgl. Fig. 6) für das Schüttgut angedeutet.

In Fig. 3 ist eine Draufsicht auf die Dosiervorrichtung 1 dargestellt, wobei in der Beschickungsöffnung 5 die sternförmig verlaufenden Mitnehmerstege 11 erkennbar sind, die unter Antrieb durch die auf die Oberseite des Gehäuses 4 aufgesetzte Antriebsvorrichtung 9 das zugeführte Schüttgut entlang der Meßstrecke 2 um etwa 270° zu der Entleerungsöffnung 7 fördern. Hierdurch ergibt sich eine Momentanlast auf der hier nach oben weisenden Hälfte der Dosiervorrichtung 1, so daß die mit Abstand von der Schwenkachse 8 angeordnete Kraftmeßvorrichtung 10 über den Zuganker 20 in die Zeichenebene hinein belastet wird. Die Kraftmeßvorrichtung 10 ist zur Erzielung einer möglichst großen, effektiven Hebellänge am Umfang des Gehäuses 4 angeordnet, kann jedoch auch noch weiter entfernt oder näher zur Schwenkachse 8 hin befestigt sein.

In Fig. 4 ist die Schnittdarstellung entlang der Schnittlinie A-A in Fig. 3 dargestellt. Neben den bereits beschriebenen Bauteilen der Dosiervorrichtung 1 ist hier eine Antriebswelle 25 in Strichlinien eingezeichnet, die von dem Kegelradgetriebe der Antriebsvorrichtung 9 ausgeht und mit einer Rotornabe 26 in Verbindung steht, an der die Mitnehmerstege 11 sternförmig angeordnet sind. Über der Rotornabe 26 befindet sich eine Rotornaben-Abdeckung 27, die eine ähnliche Höhe wie der Außenring 14 einnimmt, so daß der Zuführstutzen 12 zwischen diesem und der Rotornaben-Abdeckung 27 eingepaßt ist sowie der Entleerbereich hierdurch abgegrenzt ist. Die Mitnehmerstege 11 laufen auf einer Schleißplatte 28 um, die auf der unteren Gehäusewand 24 befestigt ist.

Das untere Endstück 30 des in das Gehäuse 4 hineinragenden Zuführstutzens 12 erstreckt sich in bevorzugter Ausführung mit seiner in Förderrichtung a (vgl. Fig. 1) weisenden Hälfte bis zu der Umlaufebene der Mitnehmerstege 11, während an seiner in Förderrichtung weisenden Hälfte eine schräg abgeschnittene Auslaßöffnung 13 vorgesehen ist, wie dies in Fig. 4 im Halbschnitt gesondert dargestellt ist. Dadurch wird beim Umlaufbetrieb der Dosiervorrichtung 1 ein strangförmiger Gutstrom 32 über den Mitnehmerstegen 11 ausgebildet und dieser zur Entleerungsöffnung 7 geführt wird. Diese strangförmige Anhäufung des Gutstromes 32 über den Mitnehmerstegen 11 ist auch in Fig. 5 in der schnittdarstellung entlang der Schnittlinie B-B dargestellt. Der Zuführstutzen 12 selbst ist in der oberen Gehäusewand 22 befestigt und über ein elastisches Zwischenstück, beispielsweise einen Gummiring, mit dem Stutzen des Verschlußschiebers 6 bzw. Zuführtrichters 50 verbunden. Auch das Endstück 30 ist bevorzugt als elastisches Endstück ausgebildet, so daß dieses Endstück 30 des Zuführstutzens 12 gegenüber größeren Klumpen ggfs. nachgiebig gestaltet ist.

Unterhalb der Entleerungsöffnung 7 ist mit einem Abstand etwa entsprechend dem halben Rotordurchmesser eine längliche Zellenradschleuse 33 angeordnet, so daß unterhalb der Entleerungsöffnung 7 eine periodisch geschlossene Kammer und somit eine druckstoßfeste Ausführung gebildet ist. Wesentlich ist hierbei die Anordnung einer Druckluftdüse 31 unmittelbar über dem Gutstrom 32 an der Entleerungsöffnung 7. Die Druckluftzuführung über einen Hochdruckschlauch ist hierbei in Fig. 1 und 5 mit dem Kennbuchstaben p angedeutet. Hierdurch wird der Gutstrom 32 nach unten hin in Richtung auf die Zellenradschleuse 33 geblasen. Dabei wird zum einen der Gutstrom 32 aufgelockert und zum anderen gut durchgemischt.

Somit gelangt das-Schüttgut in homogenisierter Form in die Zellenradschleuse 33 und kann von dort mittels eines Injektors und einer pneumatischen Förderleitung 40 (vgl. auch Fig. 2) in einen nicht dargestellten Drehrohrofen für die Zementherstellung eindosiert werden. Der Zellenradschleuse 33 kann auch eine Mischschnecke oder ähnliche Mischvorrichtung 71 (vgl. Fig. 6) vorgeschaltet sein, insbesondere wenn in vorteilhafter Ausführung mehrere Vorratsbehälter 70 und mehrere Dosiervorrichtungen 1 (vgl. Fig. 6) für unterschiedliche Schüttgüter (z.B. Gummiabfälle einerseits und Kunststoffabfälle andereseits) verwendet werden.

Es sei darauf hingewiesen, daß auch mehrere derartige Druckluftdüsen 31 über der Entleerungsöffnung 7 angeordnet sein können. Ebenso kann die Druckluftdüse 31, die zur Anpassung an die Höhe des Gutstromes 32 bevorzugt am Deckel 22 des Gehäuses 4 des Rotors 3 höhenverstellbar angeordnet ist, als Flachdüse ausgebildet sein. Hierdurch ergibt sich eine breitflächige "Abfräswirkung" auf den Gutstrom 32. Dabei reicht durch den relativ "scharfen" Druckluftstrahl (in Fig. 1, 4 und 5 strichpunktiert dargestellt) eine geringe Luftmenge aus, so daß gegenüber der ansich bekannten pneumatischen Förderung mit Ausblasen aus Zellen oder Kammern eines Dosierrotors eine bedeutend geringere Luftmenge benötigt wird.

Es sei darauf hingewiesen, daß die Mitnehmerstege 11 des Rotors 3 neben der hier gezeichneten exakten radialen Ausrichtung auch leicht gekrümmt oder (in Förderrichtung) gewölbt ausgeführt sein können. Ebenso kann eine gekapselte Dosierbandwaage als Dosiervorrichtung vorgesehen sein, wobei dann die Druckluftdüse(-n) am Abwurfbereich des Förderbandes angeordnet sind.

In Fig. 6 ist ein bevorzugtes Dosiersystem, insbesondere unter Verwendung von zwei der vorstehend beschriebenen Dosiervorrichtungen 1 dargestellt. Neben den bereits erläuterten Bauelementen ist hierbei die Abstützung der Dosiervorichtung 1 jeweils auf Wägezellen 72 von besonderer Bedeutung, da hierdurch die jeweils sich im Dosierpfad befindliche Schüttgutmasse erfaßt werden kann, insbesondere auch das Füllgewicht in dem Homogenisierungsbehälter 51. Die Wägezellen 72 stehen dabei mit der oben erwähnten Steuer-/Regeleinrichtung in Verbindung, so daß je nach Führungsgröße (Brennstoffbedarf) die Nachförderung aus dem bzw. den Vorratsbehälter(n) 70 erfolgen kann. Dies wird hier bevorzugt durch jeweils eine Austragsfräse 60 vorgenommen, deren Rotations- bzw. Vorschubgeschwindigkeit im Vorratsbehälter 70 einstellbar ist. Der Antrieb der Austragsfräse 60 erfolgt in bevorzugter Form über ein an der Unterseite der Vorratsbehälters 70 angeflanschtes Getriebe 61 mit drehzahlveränderbarem Motor 62. Diese Baueinheit ist dabei in einfach zu montierender Weise an dem Traggerüst 80 befestigt.

## Patentansprüche

1. Dosiervorrichtung zum kontinuierlichen, gravimetrischen Dosieren von schüttfähigem Gut, insbesondere Sekundärbrennstoffen, wobei ein Gutstrom, insbesondere mit einem um eine vertikale Drehachse angetriebenen Rotor, unter Ermittlung der Momentanlast über eine Meßstrecke von einer Beschickungsöffnung zu einer versetzt angeordneten Entleerungsöffnung gefördert wird, sowie mit einer Kraftmeßvorrichtung, die die Momentanlast des über die Meßstrecke geführten Gutstromes erfaßt,
**dadurch gekennzeichnet, daß**
an der Entleerungsöffnung (7) unmittelbar über dem Gutstrom (32) wenigstens eine nach unten hin ausgerichtete Druckluftdüse (31) angeordnet ist.

2. Dosiervorrichtung nach Anspruch 1, **gekennzeichnet durch** die Ausbildung als Rotor (3) mit im wesentlichen radial verlaufenden Mitnehmerstegen (11), wobei sich ein Zuführstutzen (12) unter Bildung einer Auslaßöffnung (13) bis zu der Umlaufebene der Mitnehmerstege (11) erstreckt.

3. Dosiervorrichtung nach Anspruch 2, **dadurch gekennzeichnet, daß** die Mitnehmerstege (11) an ihren radial äußeren Enden mit einem Außenring (14) verbunden sind.

4. Dosiervorrichtung nach Anspruch 3, **dadurch gekennzeichnet, daß** der Außenring (14) mit geringem Spiel am Zuführstutzen (12) vorbeigeführt ist.

5. Dosiervorrichtung nach Anspruch 3 oder 4, **dadurch gekennzeichnet, daß** der Außenring (14) unter Bildung eines Umfangsspaltes (16) einen geringfügig kleineren Durchmesser als den Durchmesser des Gehäuses (4) aufweist und der obere Rand (15) zur Abdeckung des Umfangsspaltes (16) nach außen verlaufend ausgebildet ist.

6. Dosiervorrichtung nach einem der Ansprüche 1 bis 5, **dadurch gekennzeichnet, daß** die Druckluftdüse (31) zur Mittelachse der Entleerungsöffnung (7) und zum ankommenden Gutstrom (32) hin geneigt angeordnet ist.

7. Dosiervorrichtung nach einem der Ansprüche 1 bis 6, **dadurch gekennzeichnet, daß** die Druckluftdüse (31) als Flachdüse ausgebildet ist, die insbesondere im Deckel (22) über dem Gutstrom (32) höhenverstellbar angeordnet ist.

8. Dosiervorrichtung nach einem der Ansprüche 2 bis 7, **dadurch gekennzeichnet, daß** am unteren Ende des Zuführstutzens (12) ein Endstück (30), insbesondere aus Gummi vorgesehen ist, das sich bis zu der Umlaufebene der Mitnehmerstege (11) erstreckt.

9. Dosiervorrichtung nach einem der Ansprüche 2 bis 8, **dadurch gekennzeichnet, daß** der Rotor (3) eine nahezu die Innenhöhe des Gehäuses (4) aufweisende Rotornaben-Abdeckung (27) besitzt, die mit geringem Spiel am Zuführstutzen (12) vorbeigeführt ist.

10. Dosiervorrichtung nach einem der Ansprüche 1 bis 9, **dadurch gekennzeichnet, daß** unterhalb der Entleerungsöffnung (7) eine Zellenradschleuse (33) angeordnet ist.

11. Dosiersystem unter Verwendung einer Dosiervorrichtung nach einem der Ansprüche 1 bis 10, **dadurch gekennzeichnet, daß** der Dosiervorrichtung (1) ein Homogenisierungsbehälter (51) mit einem darin umlaufenden Rührwerk (52) vorgeschaltet ist.

12. Dosiersystem unter Verwendung von zwei Dosiervorrichtungen nach einem der Ansprüche 1 bis 10, **dadurch gekennzeichnet, daß** diese Dosiervorrichtungen (1) unter zwei Vorratsbehältern (70) für unterschiedliche Schüttgüter angeordnet und austragseitig mit einer gemeinsamen Mischvorrichtung (71) verbunden sind.

13. Dosiersystem nach Anspruch 11 oder 12, **dadurch gekennzeichnet, daß** die Dosiervorrichtung (-en) (1) auf Wägezellen (72) abgestützt ist/sind.

14. Dosiersystem nach Anspruch 12 oder 13, **dadurch gekennzeichnet, daß** im Vorratsbehälter (70) eine Austragsfräse (60) vorgesehen ist.

15. Dosiersystem nach Anspruch 14, **dadurch gekennzeichnet, daß** das Getriebe (61) der Austragsfräse (60) an der Unterseite des Vorratsbehälters (70) an einem Traggerüst (80) gelagert ist.

16. Dosiersystem nach Anspruch 14 oder 15, **dadurch gekennzeichnet, daß** die Austragsfräse (60) in Abhängigkeit von der Füllhöhe/dem Füllgewicht der Dosiervorrichtung (1) betätigbar ist.

## Claims

1. A dosing device for the continuous gravimetric dosing of pourable goods, in particular secondary fuels, wherein a material flow is conveyed from a charging door to a staggered emptying hole via a measuring section, in particular by means of a rotor rotated about a vertical axis of rotation, while detecting the instantaneous load, and having a force measuring device detecting the instantaneous load of the material flow conveyed along the measuring section,
**characterized in that**
at least one downwardly oriented compressed air nozzle (31) is arranged on the emptying hole (7), immediately above the material flow (32).

2. The dosing device of claim 1, **characterized by** being formed as a rotor (3) comprising substantially radially extending entrainment ribs (11), wherein a hopper (12) extends down to the orbital plane of said entrainment ribs (11), forming a discharge opening (13).

3. The dosing device of claim 2, **characterized in that** a peripheral ring (14) is connected to radial outer ends of said entrainment ribs (11).

4. The dosing device of claim 3, **characterized in that** said peripheral ring (14) is run along said hopper (12) with a slight clearance.

5. The dosing device of either claim 3 or claim 4, **characterized in that** said peripheral ring (14) forming a circumferential gap (16) has a slightly smaller diameter than that of the housing (4), and that an upper rim (15) is formed to extend to an outward direction to cover said circumferential gap (16).

6. The dosing device of any of claims 1 to 5, **characterized in that** the compressed air nozzle (31) is inclined toward the axle center of the emptying hole (7) and toward the arriving material flow (32).

7. The dosing device of any of claims 1 to 6, **characterized in that** the compressed air nozzle (31) is formed as a flat nozzle, in particular arranged in the top (22) above the material flow (32).

8. The dosing device of any of claims 2 to 7, **characterized in that** an end portion (30), in particular made from rubber, is provided at the bottom end of said hopper (12) and extends right to the orbital plane of said entrainment ribs (11).

9. The dosing device of any of claims 2 to 8, **characterized in that** said rotor (3) includes an armature hub cover (27) which is of nearly the inner height of said housing (4) and is run past said hopper (12) with a slight clearance.

10. The dosing device of any of claims 1 to 9, **characterized in that** a bucket wheel lock (33) is arranged below said emptying hole (7).

11. A dosing system using a dosing device of any of claims 1 to 10,
**characterized in that**
a homogenizing container (51) having a stirrer (52) rotating therein is connected in series with the dosing device (1).

12. A dosing system using two dosing devices of any of claims 1 to 10,
**characterized in that**
said dosing devices (1) are arranged under two supply bins (70) for different pourable goods and are coupled to a common mixing device (71) on their discharge sides.

13. The dosing system of either claim 11 or claim 12, **characterized in that** the dosing device(s) (1) is/are supported on weighing cells (72).

14. The dosing system of either claim 12 or claim 13, **characterized in that** a discharge milling cutter (60) is provided in the supply bin (70).

15. The dosing system of claim 14, **characterized in that** the gearing (61) of said discharge milling cutter (60) is supported on the bottom side of the supply bin (70) on a supporting famework (80).

16. The dosing system of either claim 14 or claim 15, **characterized in that** the discharge milling cutter (60) can be operated as a function of the filling height/filling weight of the dosing device (1).

## Revendications

1. Dispositif de dosage pour le dosage continuel et gravimétrique d'un produit en vrac, plus particulièrement de combustibles secondaires, dans lequel un écoulement de produit est transporté, plus particulièrement avec un rotor entraîné autour d'un axe de rotation vertical, avec la détermination de la charge instantanée sur une distance mesurée, d'une ouverture d'alimentation vers une ouverture de vidage disposée de manière décalée, ainsi qu'avec un dispositif de mesure de force qui détermine la charge instantanée de l'écoulement de produit guidé sur la distance mesurée, **caractérisé en ce qu'**au moins une buse à air comprimé (31) orientée vers le bas est disposée au-dessus de l'écoulement de produit (32), au niveau de l'ouverture de vidage (7).

2. Dispositif de dosage selon la revendication 1, **caractérisé par** une forme en rotor (3) avec des ailettes ou réglettes d'entraînement (11) s'étendant sensiblement radialement, un embout d'alimentation (12) s'étendant jusqu'au plan de rotation des ailettes ou réglettes d'entraînement (11), en formant une ouverture de sortie (13).

3. Dispositif de dosage selon la revendication 2, **caractérisé en ce que** les nervures d'entraînement (11) sont reliées à un anneau extérieur (14) au niveau de leurs extrémités radiales externes.

4. Dispositif de dosage selon la revendication 3, **caractérisé en ce que** l'anneau extérieur (14) est passé devant l'embout d'alimentation (12) avec un faible jeu.

5. Dispositif de dosage selon la revendication 3 ou 4, **caractérisé en ce que** l'anneau extérieur (14) présente un diamètre légèrement inférieur à celui du boîtier (4), en formant un interstice périphérique (16), et **en ce que** le bord supérieur (15) est orienté vers l'extérieur pour couvrir l'interstice périphérique (16).

6. Dispositif de dosage selon l'une des revendications 1 à 5, **caractérisé en ce que** la buse à air comprimé (31) est inclinée vers l'axe médian de l'ouverture de vidage (7) et vers l'écoulement de produit entrant (32).

7. Dispositif de dosage selon l'une des revendications 1 à 6, **caractérisé en ce que** la buse à air comprimé (31) est conçue comme une buse plate qui est disposée de manière réglable en hauteur dans le couvercle (22) au-dessus de l'écoulement de produit (32).

8. Dispositif de dosage selon l'une des revendications 2 à 7, **caractérisé en ce que**, au niveau de l'extrémité inférieure de l'embout d'alimentation (12), est prévu un élément d'extrémité (30), constitué plus particulièrement de caoutchouc, qui s'étend jusqu'au plan de rotation des ailettes ou réglettes d'entraînement (11).

9. Dispositif de dosage selon l'une des revendications 2 à 8, **caractérisé en ce que** le rotor (3) comporte un couvercle de moyeu de rotor (27), ayant presque la hauteur interne du boîtier (4), qui est passé devant l'embout d'alimentation (12) avec un faible jeu.

10. Dispositif de dosage selon l'une des revendications 1 à 9, **caractérisé en ce que**, en dessous de l'ouverture de vidage (7) est placée une écluse à roue cellulaire (33).

11. Système de dosage utilisant un dispositif de dosage selon l'une des revendications 1 à 10, **caractérisé en ce qu'**un récipient d'homogénéisation (51), avec un mélangeur (52) tournant à l'intérieur, est branché en amont du dispositif de dosage (1).

12. Système de dosage utilisant deux dispositifs de dosage selon l'une des revendications 1 à 10, **caractérisé en ce que** ces dispositifs de dosage (1) sont disposées en dessous de deux réservoirs (70) pour différents produits en vrac et sont reliées du côté de la sortie à un dispositif mélangeur (71).

13. Système de dosage selon la revendication 11 ou 12, **caractérisé en ce que** le(s) dispositif(s) de dosage (1) est/sont disposé(s) sur des cellules de pesée (72).

14. Système de dosage selon la revendication 12 ou 13, **caractérisé en ce qu'**une fraise d'évacuation (60) est prévue dans le réservoir (70).

15. Système de dosage selon la revendication 14, **caractérisé en ce que** l'entraînement (61) de la fraise d'évacuation (60) est disposé, sur le côté inférieur du réservoir (70) sur une ossature porteuse (80).

16. Système de dosage selon la revendication 14 ou 15, **caractérisé en ce que** la fraise d'évacuation (60) peut être actionnée en fonction de la hauteur ou du poids de remplissage du dispositif de dosage (1).
